# EUROPEAN PATENT SPECIFICATION

(11) **EP 1 273 493 B1**
(45) Date of publication and mention of the grant of the patent: **29.12.2004**
(21) Application number: 02015069.4
(22) Date of filing: 05.07.2002
(51) Int. Cl.: B60R 25/02

(54) **Perfected automotive electric steering lock**
Perfektionierte elektrische Verriegelungsvorrichtung für eine Fahrzeugslenkung
Dispositif perfectionné de verrouillage de la colonne de direction d'un véhicule

(30) Priority: 06.07.2001 IT TO20010663
(43) Date of publication of application: 08.01.2003
(73) Proprietor: TRW Automotive Italia S.p.A, 10129 Torino (IT)
(72) Inventor: TORRINI Stefano, 10093 COLLEGNO (IT)
(74) Representative: Cerbaro, Elena, Dr.

(56) References cited:
- EP-A- 1 078 829

## Description

The present invention relates to a perfected automotive electric steering lock.

More specifically, the present invention relates to an electric steering lock of the type comprising a push rod, which is pushed into a forward work position, in which it locks the steering shaft of the vehicle in an angularly fixed position, and is moved into a withdrawn rest position, in which it permits free rotation of the steering shaft, by means of an electric motor.

In a known steering lock of this type, the electric motor operates in both directions, and directly controls withdrawal of the push rod via a reducer comprising a number of cascade reduction members. When the withdrawn position is reached, a first lock member is activated to lock the reducer and so lock the push rod in the withdrawn position. To activate the steering lock, operation of the motor in the opposite direction releases the first lock member, and a spring pushes the push rod into the forward position, in which it is locked by a second lock member.

This known steering lock has the drawback of the reducer comprising a number of members, so that, during the withdrawal movement, the torque transmitted by the motor is low, and the steering lock may remain in the work position. Which drawback is further compounded in the case of vehicles calling for fast release of the steering lock.

Moreover, in a multistage reducer, any slack and manufacturing tolerances mount up to impair the efficiency of the system as a whole.

For safety reasons, the above known steering lock also fails to guarantee its release position in the event of a fault on the motor or collision of the vehicle, in which case, the spring pushes the push rod into the forward position.

The above known steering lock is also fairly complex by comprising numerous lock members for locking the push rod in the withdrawn or forward position.

And finally, controlling operation of the motor in two opposite directions calls for a complex control circuit. An electric steering lock provided with an electric motor controlled to rotate in one rotation direction and corresponding to the preamble of claim 1 is shown in EP 1 078 829 A.

It is an object of the present invention to provide a perfected steering lock designed to eliminate the drawbacks of known solutions.

According to the present invention, there is provided an automotive electric steering lock as claimed in claim 1.

A non-limiting embodiment of the invention will be described by way of example with reference to the accompanying drawings, in which:
Figure 1 shows a cross section of the electric steering lock according to the present invention;
Figure 2 shows a cross section of the steering lock along line II-II in Figure 1;
Figure 3 shows an exploded view of a number of component parts of the steering lock.

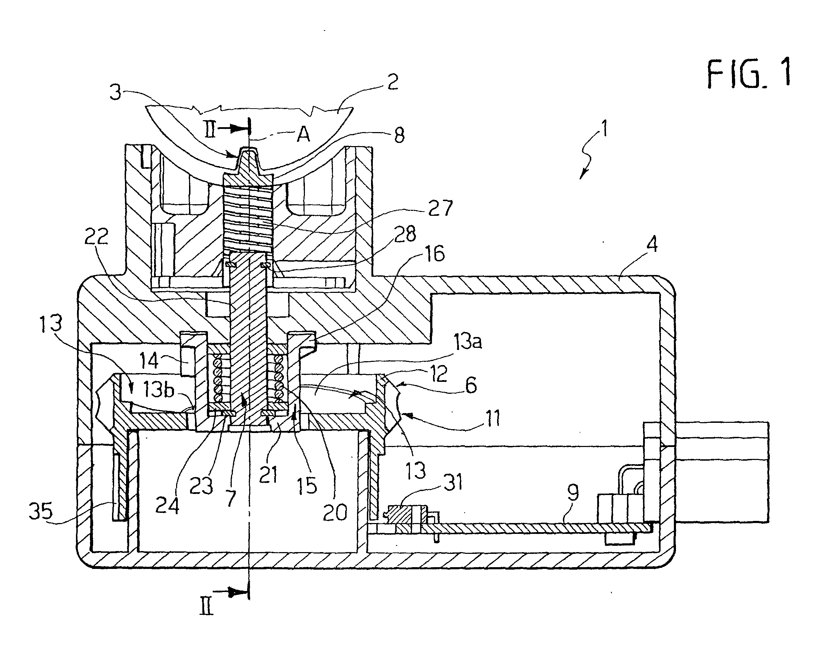

Number 1 in the accompanying drawings indicates as a whole an automotive electric steering lock fitted to a known steering assembly, of which Figure 1 shows only part of a steering shaft 2 having a radial seat 3.

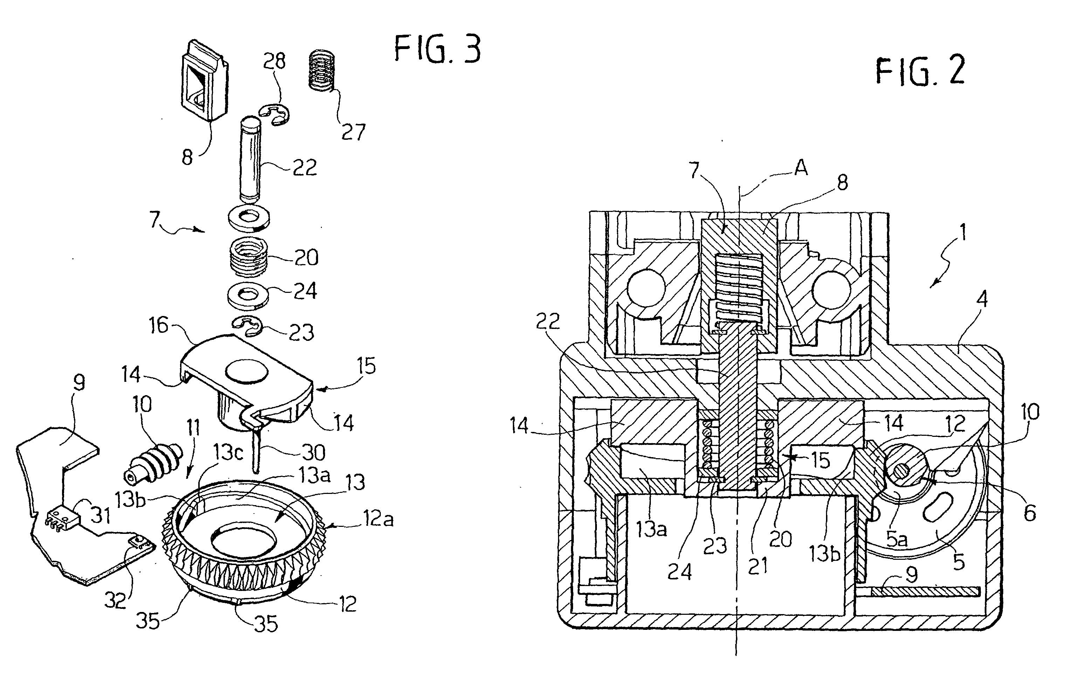

Steering lock 1 comprises an outer casing 4 housing an electric motor 5 (Figure 2), which, via a reduction assembly 6, a rotary/linear conversion assembly 11 and a sliding assembly 7, controls the axial movement of a push rod 8 for locking steering shaft 2 angularly with respect to casing 4 (Figure 1). More specifically, push rod 8 is moved, by electric motor 5 and in a direction A perpendicular to steering shaft 2, between a forward angular locking position, in which it engages radial seat 3 (as shown in Figure 1), and a withdrawn rest position, in which it permits free rotation of steering shaft 2.

More specifically, electric motor 5 is controlled to rotate in the same direction at all times by an electronic drive circuit (not shown) defined by a printed circuit board 9, and comprises an output shaft 5a fitted integrally with a worm 10 forming part of reduction assembly 6. Worm 10 engages the external teeth 12a of a gear 12 having two internal cams 13, each defined by a first portion 13a with a gradually increasing lift, a second portion 13b with a more steeply decreasing lift, and an intermediate portion 13c interposed between the first and second portion.

Cams 13 are engaged by corresponding cam follower portions 14 which, together with cams 13, define rotary/linear conversion assembly 11 and are integral with a cup-shaped slide 15 forming part of sliding assembly 7 and having a substantially rectangular top flange 16 with rounded short sides from which cam follower portions 14 extend. Slide 15 houses a return spring 20 compressed between casing 4 and a bottom wall 21 of slide 15, and also surrounds a portion of a rod 22, a first end of which is maintained integral with slide 15 by two washers 23, 24 interposed between bottom wall 21 of slide 15 and return spring 20.

A second end of rod 22 extends inside push rod 8, which is hollow and also houses a compression spring 27 compressed between a top inner wall of push rod 8 and a spring washer 28 engaging a groove in rod 22 to allow a certain amount of slack between push rod 8 and rod 22 when moving sliding assembly 7 forward and locking steering shaft 2.

On its outer surface, gear 12 has two pairs of teeth 35 designed to interfere with a first microswitch 31 fitted to printed circuit board 9; and slide 15 has a projection 30 extending from a corner of flange 16 towards a second microswitch 32 fitted to printed circuit board 9.

Operation of steering lock 1 will now be described as of a lock condition, in which cam follower portions 14 of slide 15 are located at intermediate portions 13c of cams 13, so that sliding assembly 7 is in the forward position, and push rod 8 engages radial seat 3 in steering shaft 2.

As of the above condition, as soon as the vehicle central control unit (not shown) sends a release consent signal, electric motor 5 is activated to rotate gear 12, so that cam follower portions 14 travel along second portions 13b of cams 13, and slide 15 is lowered by return spring 20 to restore rod 22 and push rod 8 rapidly to the withdrawn position of non-interference with radial seat 3 in steering shaft 2. By virtue of the steep slope of second cam portions 13b, steering lock 1 is therefore released rapidly, typically before the vehicle is turned on.

To return to the lock condition, electric motor 5 is again activated and, by means of worm 10, rotates gear 12 so that cam followers 14 of slide 15 engage first portions 13a of cams 13; and sliding assembly 7 is gradually moved into the forward position compressing return spring 20. As sliding assembly 7 moves forward, compression spring 27 allows push rod 8 to remain in the withdrawn position if radial seat 3 in steering shaft 2 is not perfectly aligned with push rod 8, and to move into the extracted position once radial seat 3 and push rod 8 are aligned.

Teeth 35 on gear 12, projection 30 on slide 15, and microswitches 31, 32 on printed circuit board 9 provide for determining the position of sliding assembly 7 and correct operation of microswitches 31, 32, That is, as gear 12 rotates, first microswitch 31 is activated as teeth 35 travel past it; and projection 30 activates second microswitch 32 when slide 15 is in the withdrawn position. In other words, when steering lock 1 is in the lock position with slide 15 in the forward position, only first microswitch 31 is activated; conversely, when the steering lock is in the release position with slide 15 in the withdrawn position, both microswitches 31, 32 are activated. By determining correct switching of the signals supplied by microswitches 31, 32, the electronic control circuit can thus determine the position of the steering lock, as well as correct operation of microswitches 31, 32, and so prevent non-release of steering lock 1 from creating problems when starting the vehicle.

Steering lock 1 described therefore has numerous advantages as compared with known solutions. In particular, by featuring a single reduction assembly, torque transmission is high and so ensures locking of the steering lock at all times. Release is also ensured both by the high torque transmitted, which ensures rotation of gear 12 at all times, and by withdrawal of sliding assembly 7 being produced directly by return spring 20.

One-way operation of electric motor 5 simplifies the control circuit, which is thus cheaper and more reliable and compact.

The transmission being irreversible (gear 12 cannot exert sufficient torque on worm 10), there is no need, as in some known power steering devices, for auxiliary safety members, such as an auxiliary safety electromagnet, so that steering lock 1 is simpler, cheaper and safer than known power steering devices.

Clearly, changes may be made to the steering lock as described and illustrated herein without, however, departing from the scope of the present invention.

## Claims

1. An automotive electric steering lock (1) comprising an electric motor (5) having an output shaft (5a); a reduction assembly (6) connected to said output shaft; a rotary/linear conversion assembly (11) connected to said reduction assembly; and a push rod (8) controlled by said rotary/linear conversion assembly (11), and movable between a forward position, in which it maintains a steering shaft (2) in an angularly fixed position, and a withdrawn position, in which it permits free rotation of said steering shaft (2); said reduction assembly (6) comprising a single reduction unit, and
said electric motor (5) being controlled to rotate in one rotation direction,
said rotary/linear conversion assembly (11) comprising cam (13) and cam follower (14) means;
**characterized in that** said cam means (13) comprise a first portion (13a) having a gradually increasing lift; and a second portion (13b) having a lift decreasing more steeply than said first portion.

2. A steering lock as claimed in Claim 1, **characterized in that** said reduction unit (6) is irreversible.

3. A steering lock as claimed in Claim 1 or 2, **characterized in that** said reduction unit (6) comprises a worm member (10) fixed to said output shaft (5a); and a gear (12) meshing with said worm member.

4. A steering lock as claimed in any one of Claims 1-3, **characterized by** comprising a sliding assembly (7) interposed between said rotary/linear conversion assembly (11) and said push rod (8), and movable in a lock/release direction.

## Patentansprüche

1. Elektrische Lenkradsperre (1) für ein Kraftfahrzeug, umfassend einen Elektromotor (5), der eine Abtriebswelle (5a) aufweist; eine Reduktions- bzw. Untersetzungsanordnung (6), die mit der Abtriebswelle verbunden ist; eine Rotations/Linear-Umwandlungsanordnung (11), die mit der Untersetzungsanordnung verbunden ist; und eine Schubstange (8), die durch die Rotations/Linear-Umwandlungsanordnung (11) gesteuert bzw. geregelt ist und zwischen einer Vorwärtsposition, in welcher sie eine Lenkwelle (2) in einer winkelmäßig fixierten Position hält, und einer zurückgezogenen Position bewegbar ist, in welcher sie eine freie Rotation der Lenkwelle (2) ermöglicht; wobei die Untersetzungsanordnung (6) eine einzelne Untersetzungseinheit umfaßt und der Elektromotor (5) gesteuert bzw. geregelt ist, um in einer Drehrichtung zu drehen, wobei die Rotations/Linear-Umwandlungsanordnung (11) Nocken- (13) und Nockenstößel- (14) -Mittel umfaßt, **dadurch gekennzeichnet, daß** die Nockenmittel (13) einen ersten Abschnitt (13a), der einen sich zunehmend erhöhten Anstieg aufweist, und einen zweiten Abschnitt (13b) umfassen, der einen Anstieg aufweist, der steiler als der erste Abschnitt abnimmt

2. Lenkradsperre nach Anspruch 1, **dadurch gekennzeichnet, daß** die Untersetzungseinheit (6) irreversibel ist,

3. Lenkradsperre nach Anspruch 1 oder 2, **dadurch gekennzeichnet, daß** die Untersetzungseinheit (6) ein Schrauben- bzw. Schneckenglied (10), das an die Abtriebswelle (5a) festgelegt ist; und ein Ritzel (12) umfaßt, das mit dem Schneckenglied kämmt.

4. Lenkradsperre nach einem der Ansprüche 1-3, **gekennzeichnet durch** ein Umfassen einer Gleitanordnung (7), die zwischen der Rotations/Linear-Umwandlungsanordnung (11) und der Schubstange (8) zwischengelagert ist und in einer Verriegelungs/Löse-Richtung bewegbar ist.

## Revendications

1. Verrouillage (1) de la colonne de direction d'un véhicule comprenant un moteur électrique (5) possédant un arbre de sortie (5a) ; un ensemble (6) de réduction raccordé audit arbre de sortie ; un ensemble (11) de conversion linéaire/rotative connecté audit ensemble de réduction ; et une tige-poussoir (8) commandée par ledit ensemble (11) de conversion linéaire/rotative, et mobile entre une position vers l'avant, dans laquelle elle maintient un arbre de direction (2) dans une position angulairement fixe, et une position rétractée, dans laquelle elle permet une rotation libre dudit arbre de direction (2) ; ledit ensemble (6) de réduction comprenant une unité unique de réduction, et ledit moteur électrique (5) étant commandé afin de tourner dans une direction de rotation,
ledit ensemble (11) de conversion linéaire/rotative comprenant un moyen de came (13) et un moyen de poussoir de soupape (14) ;
**caractérisé en ce que** ledit moyen de came (13) comprend une première partie (13a) qui présente un soulèvement augmentant progressivement ; et une seconde partie (13b) qui présente un soulèvement diminuant de manière plus abrupte que ladite première partie.

2. Verrouillage de la colonne de direction selon la revendication 1, **caractérisé en ce que** ladite unité (6) de réduction est irréversible.

3. Verrouillage de la colonne de direction selon la revendication 1 ou 2, **caractérisé en ce que** ladite unité (6) de réduction comprend un élément (10) de vis sans fin fixé audit arbre de sortie (5a) ; et un engrenage (12) qui s'engrène avec ledit élément de vis sans fin.

4. Verrouillage de la colonne de direction selon l'une quelconque des revendications 1 à 3, **caractérisé en ce qu'**il comprend un ensemble (7) coulissant intercalé entre ledit ensemble (11) de conversion linéaire/rotative et ladite tige-poussoir (8), et mobile dans une direction de verrouillage/déverrouillage.
